(19) Europäisches Patentamt
European Patent Office
Office européen des brevets

(11) **EP 1 796 372 A1**

(12) **EUROPEAN PATENT APPLICATION**

(43) Date of publication:
**13.06.2007 Bulletin 2007/24**

(51) Int Cl.:
***H04N 1/60*** *(2006.01)*

(21) Application number: **06125758.0**

(22) Date of filing: **08.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.12.2005 KR 20050121248**

(71) Applicant: **Samsung Electronics Co., Ltd.**
**Suwon-si**
**442-742 Gyeonggi-Do (KR)**

(72) Inventors:
• **Lee, Sang-jin**
**Seoul (KR)**
• **Kim, Moon-cheol**
**335-204 Cheongmyeong**
**Yeongtong-gu, Suwon-si, Gyeonggi-do (KR)**
• **Um, Jin-sub**
**Suwon-si, Gyeonggi-do (KR)**
• **Lee, Chang-woo**
**Suwon-si, Gyeonggi-do (KR)**

(74) Representative: **Walaski, Jan Filip et al**
**Venner Shipley LLP**
**20 Little Britain**
**London EC1A 7DH (GB)**

(54) **Image capture device**

(57) An image capture device and method for processing an image with colour distortion minimized based on a wide colour gamut and an image having colour properties appropriate to various standards, and a recording medium storing a program for performing the method. The image capture device includes a first conversion unit converting an input image signal into an RGB signal having a wide colour gamut, a gamma correction unit performing gamma correction on the RGB signal using gamma curve information determined according to an output format of the image capture device, and a second conversion unit converting a colour domain of the gamma corrected RGB signal into a luminance and chrominance signal having a colour domain determined according to the output format of the image capture device, using a colour domain conversion matrix.

**Description**

The present invention relates to an image capture device, particularly but not exclusively to an image capture device and method of processing an image in an image capture device based on a wide colour gamut.

An image capture device includes a camcorder or a camera. The image capture device receives an image through an imaging device such as a charge-coupled device or a complementary metal-oxide semiconductor (CMOS) sensor and converts an input image signal into an RGB signal using linear matrix transformation. Here, signals beyond a colour gamut according to standards such as sRGB/Rec. and ITU-RBT.709 are generated. The colour gamut is the range of colours that can be accurately represented when an image captured in the image capture device is reproduced. Accordingly, the colour gamut is determined according to the display standard of an image reproducing device (or a display device). Signals beyond the colour gamut means signals beyond the range of colours that can be represented during reproduction.

A conventional image capture device clips an RGB signal using the boundary of the colour gamut, performs gamma correction of the clipped RGB signal, and converts the gamma-corrected RGB signal into a YCbCr signal. The conventional image capture device clips the entire RGB signal including all of the signals beyond the colour gamut, and therefore, when the image signal received through an imaging device has so many signals beyond the colour gamut, the image captured by the conventional image capture device has much colour distortion. As a result, when the image captured by the conventional image capture device is reproduced, reproduction of colours of the image is much different from that according to human visual characteristics.

The present invention provides an image capture device and method for capturing an image with colour distortion minimized based on a wide colour gamut, and a recording medium storing a program for performing the method.

The present invention also provides an image capture device and method for capturing an image having colour properties appropriate to diverse standards, and a recording medium storing a program for performing the method.

According to an aspect of the present invention, there is provided an image capture device including a first conversion unit converting an input image signal into an RGB signal having a wide colour gamut, a gamma correction unit performing gamma correction on the RGB signal using gamma curve information determined according to an output format of the image capture device, and a second conversion unit converting a colour domain of the gamma corrected RGB signal into a luminance and chrominance signal having a colour domain determined according to the output format of the image capture device, using a colour domain conversion matrix.

The image capture device may further include a gamut clipping/mapping unit performing gamut clipping on the luminance and chrominance signal output from the second conversion unit based on a wide colour gamut clipping range corresponding to the output format or performing gamut mapping on the luminance and chrominance signal output from the second conversion unit based on the wide colour gamut clipping range corresponding to the output format and a clipping ratio.

According to another aspect of the present invention, there is provided an image capture method for an image capture device. The image capture method includes converting an input image signal into an RGB signal having a wide colour gamut; performing gamma correction on the RGB signal using gamma curve information determined according to an output format of the image capture device; and converting a colour domain of the gamma corrected RGB signal into a luminance and chrominance signal having a colour domain determined according to the output format of the image capture device, using a colour domain conversion matrix, and outputting the luminance and chrominance signal.

The image capture method may further include performing gamut clipping on the luminance and chrominance signal based on a wide colour gamut clipping range corresponding to the output format of the image capture device or performing gamut mapping on the luminance and chrominance signal based on the wide colour gamut clipping range corresponding to the output format and a clipping ratio.

According to still another aspect of the present invention, there is provided a computer readable recording medium for storing a program performing an image capture method in an image capture device. The computer readable recording medium includes a code for converting an input image signal into an RGB signal having a wide colour gamut; a code for performing gamma correction on the RGB signal using gamma curve information determined according to an output format of the image capture device; and a code for converting a colour domain of the gamma corrected RGB signal into a luminance and chrominance signal having a colour domain determined according to the output format of the image capture device, using a colour domain conversion matrix, and outputting the luminance and chrominance signal.

Embodiments of the invention will now be described, by way of example, with reference to the attached drawings, in which :

Figure 1 is a functional block diagram of an image capture device according to an embodiment of the present invention;
Figure 2 illustrates a gamma curve according to Recommendation ITU-R BT.1361;
Figure 3 illustrates a gamma curve according to an xvYCC standard;
Figure 4 is a functional block diagram of an image capture device according to another embodiment of the present invention;

Figure 5 illustrates an example of comparison between a luminance signal and a chrominance signal having a wide colour gamut and an sRGB colour gamut in 8-bit resolution;

Figure 6 is a functional block diagram of an image capture device according to still another embodiment of the present invention;

Figure 7 is a detailed block diagram of a gamma correction unit and a second conversion unit shown in Figure 6;

Figure 8 is a functional block diagram of an image capture device according to yet another embodiment of the present invention;

Figure 9 is a flowchart of an image capture method according to an embodiment of the present invention; and

Figure 10 is a flowchart of an image capture method according to another embodiment of the present invention.

Hereinafter, preferred embodiments of the present invention will be described in detail with reference to the attached drawings. In the drawings, the same reference numerals denote the same elements throughout.

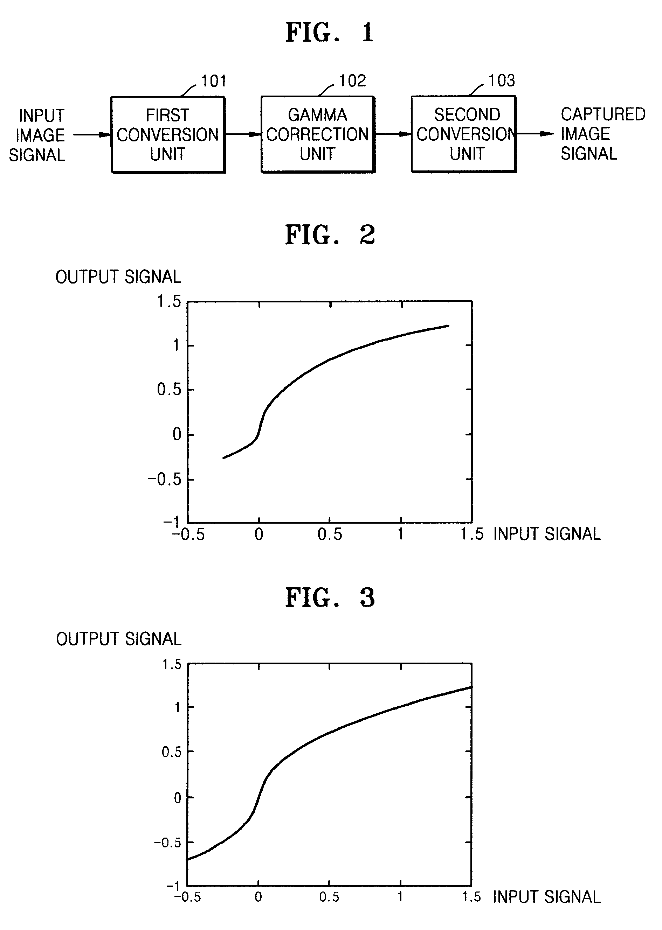

Figure 1 is a functional block diagram of an image capture device according to an embodiment of the present invention. Referring to Figure 1, the image capture device includes a first conversion unit 101, a gamma correction unit 102, and a second conversion unit 103.

When an image signal having a linear characteristic is input through an imaging device (not shown), the first conversion unit 101 converts the input image signal into an RGB signal having a wide colour gamut using a conversion matrix. Accordingly, the RGB signal output from the first conversion unit 101 includes a signal having a negative value and a signal having a value greater than "1". The conversion matrix may be obtained using, for example, Least Mean Square Filtering (LMSF) so that a CIE-RGB colour matching function can be obtained with respect to the input image signal. The LMSF has a minimum error statistically.

The gamma correction unit 102 receives the RGB signal having the wide colour gamut from the first conversion unit 101. Upon receiving the RGB signal, the gamma correction unit 102 performs gamma correction of the RGB signal having the wide colour gamut using a gamma curve predetermined according to an output format of the image capture device. For example, when the output format of the image capture device is Recommendation ITU-R BT.1361, the gamma correction unit 102 performs the gamma correction of the RGB signal based on a gamma curve illustrated in Figure 2. Figure 2 illustrates a gamma curve according to the Recommendation ITU-R BT.1361. Referring to Figure 2, an input signal is an RGB signal having the wide colour gamut and an output signal is a gamma corrected RGB signal. The gamma curve illustrated in Figure 2 may be defined as Equation (1):

$$
\begin{aligned}
E' &= 1.099 \times L^{0.45} - 0.099 && \text{for } 0.018 \leq L \\
E' &= 4.50 \times L && \text{for } -0.018 \leq L < 0.018 \quad ...(1) \\
E' &= -(1.099 \times (-L)^{0.45} - 0.099) && \text{for } L < -0.018,
\end{aligned}
$$

where L denotes the RGB signal having the wide colour gamut, which is input to the gamma correction unit 102; and E' denotes the gamma corrected RGB signal output from the gamma correction unit 102.

When the output format of the image capture device is of an xvYCC standard, the gamma correction unit 102 performs the gamma correction of the RGB signal based on a gamma curve illustrated in Figure 3. Figure 3 illustrates a gamma curve according to the xvYCC standard. Referring to Figure 3, an input signal is an RGB signal having the wide colour gamut and an output signal is a gamma corrected RGB signal. The gamma curve illustrated in Figure 3 may be defined as Equation (2):

$$
\begin{aligned}
E' &= 1.099 \times L^{0.45} - 0.099 && \text{for } 0.018 \leq L < 1.33 \\
E' &= 4.50 \times L && \text{for } -0.0045 \leq L < 0.018 && ...(2) \\
E' &= -\{1.099 \times (-4 \times L)^{0.45} - 0.099\}/4 && \text{for } -0.25 \leq L < -0.0045,
\end{aligned}
$$

where L denotes the RGB signal having the wide colour gamut, which is input to the gamma correction unit 102; and E' denotes the gamma corrected RGB signal output from the gamma correction unit 102.

The image capture device may have an output format other than the xvYCC standard or the Recommendation ITU-R BT.1361. The output format of the image capture device is determined according to a display format of a device for reproducing an image captured by the image capture device.

The second conversion unit 103 receives the gamma corrected RGB signal from the gamma correction unit 102. Upon receiving the gamma corrected RGB signal, the second conversion unit 103 converts the colour domain of the gamma corrected RGB signal into a luminance signal and a chrominance signal (YCbCr or YUV) having a colour domain determined according to the output format of the image capture device using a colour domain conversion matrix.

The colour domain conversion matrix is predetermined according to the output format of the image capture device. For example, when the output format is sRGB, the colour domain conversion matrix is configured to convert the colour domain of the gamma corrected RGB signal into a luminance signal and a chrominance signal having an sRGB colour domain. When the output format is sYCC, the colour domain conversion matrix is configured to convert the colour domain of the gamma corrected RGB signal into a luminance signal and a chrominance signal having an sYCC colour domain. When the output format is xvYCC, the colour domain conversion matrix is configured to convert the colour domain of the gamma corrected RGB signal into a luminance signal and a chrominance signal having an xvYCC colour domain. The luminance and chrominance signals are output as captured image signals. The output format may be one other than sRGB, sYCC, and xvYCC.

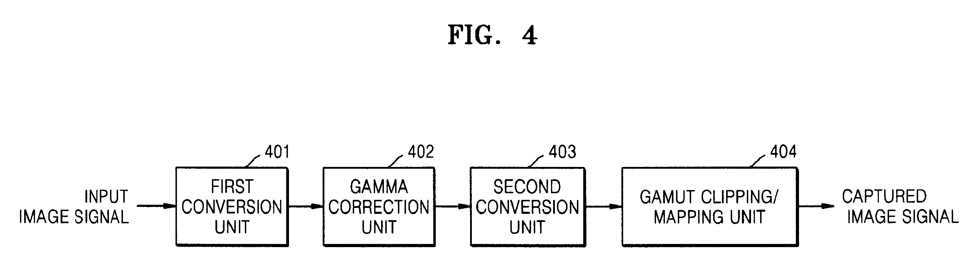

Figure 4 is a functional block diagram of an image capture device according to another embodiment of the present invention. Referring to Figure 4, the image capture device includes a first conversion unit 401, a gamma correction unit 402, a second conversion unit 403, and a gamut clipping/mapping unit 404.

The first conversion unit 401, the gamma correction unit 402, and the second conversion unit 403 illustrated in Figure 4 are the same as the first conversion unit 101, the gamma correction unit 102, and the second conversion unit 103 illustrated in Figure 1.

The gamut clipping/mapping unit 404 is implemented as a gamut clipping unit or a gamut mapping unit. When the gamut clipping/mapping unit 404 is implemented as the gamut clipping unit, the gamut clipping/mapping unit 404 clips a signal beyond the wide colour gamut among the luminance and chrominance signals transmitted from the second conversion unit 403 and outputs a result of the clipping as a captured image signal. The wide colour gamut may vary with the output format of the image capture device.

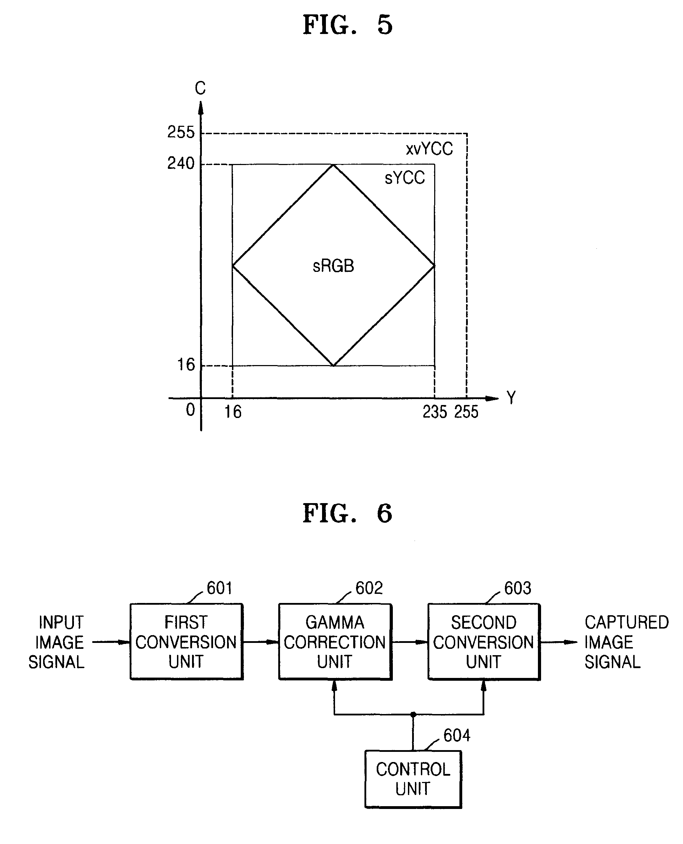

Figure 5 illustrates an example of a comparison between a luminance signal Y and a chrominance signal C having a wide colour gamut and an sRGB colour gamut in 8-bit resolution. Referring to Figure 5, when the output format of the image capture device is sYCC, the luminance signal Y beyond a range of 16-235 is a signal beyond the wide colour gamut and is subjected to gamut clipping. The chrominance signal C beyond a range of 16-240 is also a signal beyond the wide colour gamut and is subject to gamut clipping. When the output format of the image capture device is xvYCC, the luminance signal Y and the chrominance signal C which are beyond a range of 1-254 are signals beyond the wide colour gamut and are subject to gamut clipping.

In the case of xvYCC, "0" and "255" are used as synchronizing signals and are not included in an effective signal range. When the output format of the image capture device is sRGB, wide colour gamut clipping is performed based on the sRGB area. For clarity of the description, clipping ranges for the luminance signal Y and the chrominance signal C are specified in Figure 5. However, the clipping ranges may vary with the image capture device and display conditions of an image reproducing device corresponding to the image capture device.

When the gamut clipping/mapping unit 404 is implemented as the gamut mapping unit, the gamut clipping/mapping unit 404 clips the value of a luminance signal and the value of a chrominance signal based on a wide colour gamut clipping range set according to the output format of the image capture device, monitors clipping ratios for the luminance signal and the chrominance signal, and performs gamut mapping between the clipped luminance signal and the clipped chrominance signal so that colour tone or brightness of a reproduced image is maintained constant.

For example, when the output format of the image capture device is sYCC, if a chrominance signal Cb has a value of 250 and a chrominance signal Cr has a value of 220, 10 of the chrominance signal Cb is clipped (to 240) based on the wide colour gamut clipping range while the chrominance signal Cr is not clipped because it is within the wide colour gamut clipping range. Since 4% of the chrominance signal Cb is clipped while none of the chrominance signal Cr is clipped, the colour tone of a reproduced image may not be constant. In this situation, the gamut clipping/mapping unit 404 performs the gamut clipping between the chrominance signals Cb and Cr so that 4% of the chrominance signal Cr is clipped. During gamut mapping, the clipping ratios may be different. For example, when the clipping ratio for the chrominance signal Cb is 4%, the clipping ratio for the chrominance signal Cr may not be necessarily 4% but may be different from the clipping ratio for the chrominance signal Cb. The clipping ratios may be set differently so long as the colour tone or brightness of a reproduced image is maintained constant.

A result of the operation of the gamut clipping/mapping unit 404 is output as a captured image signal of the image capture device.

Figure 6 is a functional block diagram of an image capture device according to still another embodiment of the present invention. Referring to Figure 6, the image capture device includes a first conversion unit 601, a gamma correction unit 602, a second conversion unit 603, and a control unit 604.

The first conversion unit 601 is the same as the first conversion unit 101 illustrated in Figure 1.

The gamma correction unit 602 may include a plurality of gamma curve tables or may be designed such that gamma curve information is updated according to an output format set in the image capture device.

In the case where the gamma correction unit 602 includes a plurality of gamma curve tables, the plurality of gamma curve tables are set according to the output formats that can be set in the image capture device. For example, when sRGB, sYCC, and xvYCC can be set as an output format in the image capture device, gamma curve tables corresponding to the output formats, sRGB, sYCC, and xvYCC, are included in the gamma correction unit 602. When the number of output formats that can be set in the image capture device is "n", the gamma correction unit 602 includes "n" gamma curve tables respectively corresponding to the "n" output formats. The gamma correction unit 602 outputs a value from one gamma curve table among the plurality of gamma curve tables according to output format information provided from the control unit 604 as a gamma corrected RGB signal with respect to an input RGB signal. The input RGB signal has a wide colour gamut.

In the case where the gamma correction unit 602 is designed such that the gamma curve information is updated according to the output format set in the image capture device, upon receiving the gamma curve information from the control unit 604 according to the output format, the gamma correction unit 602 outputs a gamma corrected RGB signal with respect to the input RGB signal based on the received gamma curve information. Here, the gamma correction unit 602 has gamma curve information only corresponding to a single output format. The gamma correction information that the gamma correction unit 602 has is updated with gamma correction information provided from the control unit 604 each time the output format set in the image capture device changes.

The second conversion unit 603 may include a plurality of colour domain conversion matrixes or may be designed such that a colour domain conversion matrix is updated according to an output format set in the image capture device.

In the case where the second conversion unit 603 includes the plurality of colour domain conversion matrixes, the plurality of colour domain conversion matrixes are set according to output formats that can be set in the image capture device. For example, when sRGB, sYCC, and xvYCC can be set as an output format in the image capture device, colour domain conversion matrixes corresponding to the output formats, sRGB, sYCC, and xvYCC, are included in the second conversion unit 603. When the number of output formats that can be set in the image capture device is "n", the second conversion unit 603 includes "n" colour domain conversion matrixes respectively corresponding to the "n" output formats. The second conversion unit 603 outputs a signal from one colour domain conversion matrix among the plurality of colour domain conversion matrixes according to output format information provided from the control unit 604 as a luminance and chrominance signal with respect to the input gamma corrected RGB signal. The plurality of colour domain conversion matrixes, as in the second conversion unit 103 shown in Figure 1, convert a colour domain of the gamma corrected RGB signal into a luminance and chrominance signal having a colour domain set according to the output format of the image capture device.

In the case where the second conversion unit 603 is designed such that the colour domain conversion matrix is updated according to the output format set in the image capture device, upon receiving colour domain conversion matrix information from the control unit 604 according to the output format, the second conversion unit 603 converts the colour domain of the gamma corrected RGB signal into a luminance and chrominance signal having a colour domain set according to the output format based on the received colour domain conversion matrix information. Here, the second conversion unit 603 has a single colour domain conversion matrix corresponding to a single output format. The colour domain conversion matrix that the second conversion unit 603 has is updated based on colour domain conversion matrix information provided from the control unit 604 each time the output format set in the image capture device changes.

When the gamma correction unit 602 includes a plurality of gamma curve tables and the second conversion unit 603 includes a plurality of colour domain conversion matrixes, the control unit 604 provides information on an output format set in the image capture device to the gamma correction unit 602 and the second conversion unit 603. Alternatively, when the gamma correction unit 602 and the second conversion unit 603 respectively include gamma curve information and colour domain conversion matrix information which correspond to a single output format, the control unit 604 provides gamma curve information corresponding to an output format set in the image capture device to the gamma correction unit 602 and colour domain conversion matrix information corresponding thereto to the second conversion unit 603. The gamma curve information and the colour domain conversion matrix information may be provided by the control unit 604 or other units through a communication means such as Inter-Integrated Circuit (I2C) or Joint Test Action Group (J-TAG).

For example, information on a plurality of gamma curves corresponding to output formats that can be set in the image capture device and information on a plurality of colour domain conversion matrixes corresponding thereto may be stored in a separate memory (not shown). Then, the control unit 604 may read gamma curve information and colour domain conversion matrix information which correspond to a current output format from the memory and provide the two types of information to the gamma correction unit 602 and the second conversion unit 603, respectively. The gamma curve information and the colour domain conversion matrix information stored in the memory may be provided to the gamma correction unit 602 and the second conversion unit 603 through a communication means such as I2C or J-TAG without using the control unit 604.

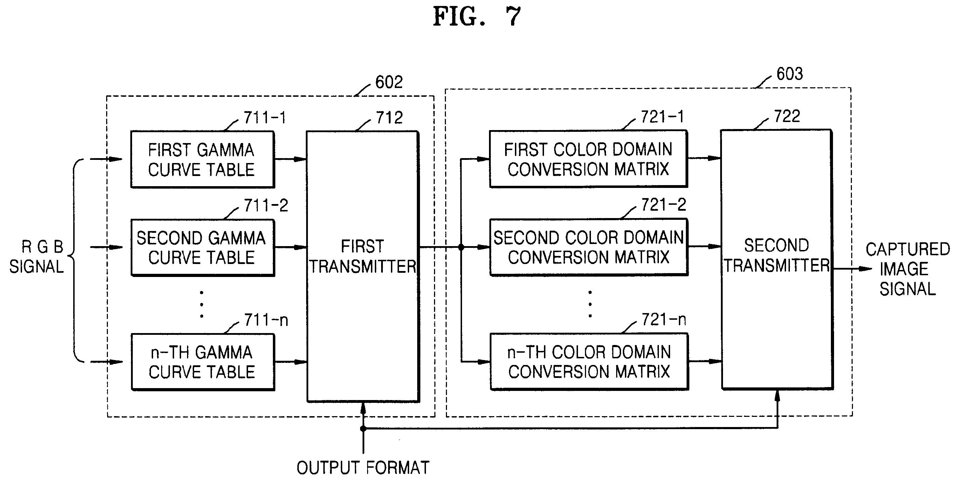

When the gamma correction unit 602 includes a plurality of gamma curve tables and the second conversion unit 603 includes a plurality of colour domain conversion matrixes, the gamma correction unit 602 and the second conversion unit 603 have a structure illustrated in Figure 7. Figure 7 is a detailed block diagram of the gamma correction unit 602 and the second conversion unit 603 shown in Figure 6.

Referring to Figure 7, the gamma correction unit 602 includes first through n-th gamma curve tables 711_1 through 711_n and a first transmitter 712. The first through n-th gamma curve tables 711_1 through 711_n receive an RGB signal having a wide colour gamut from the first conversion unit 601. Upon receiving the RGB signal, the first through n-th gamma curve tables 711_1 through 711_n output gamma corrected RGB signals, respectively. Gamma curve information stored in each of the first through n-th gamma curve tables 711_1 through 711_n may include the gamma curve shown in Figure 2 or 3.

The gamma corrected RGB signals output from the first through n-th gamma curve tables 711_1 through 711_n are transmitted to the first transmitter 712. The first transmitter 712 selects one among the gamma corrected RGB signals received from the first through n-th gamma curve tables 711_1 through 711_n according to an output format of the image capture device and transmits the selected gamma corrected RGB signal to the second conversion unit 603. Information on the output format may be provided from the control unit 604.

The second conversion unit 603 includes first through n-th colour domain conversion matrixes 721_1 through 721_n and a second transmitter 722. The first through n-th colour domain conversion matrixes 721_1 through 721_n receive the gamma corrected RGB signal output from the first transmitter 712. Upon receiving the gamma corrected RGB signal, the first through n-th colour domain conversion matrixes 721_1 through 721_n respectively output luminance and chrominance signals having a changed colour domain. The first through n-th colour domain conversion matrixes 721_1 through 721_n operate in the same manner as the second conversion unit 103 shown in Figure 1. The luminance and chrominance signals output from the first through n-th colour domain conversion matrixes 721_1 through 721_n are transmitted to the second transmitter 722.

Information stored in the first through n-th gamma curve tables 711_1 through 711_n and information stored in the first through n-th colour domain conversion matrixes 721_1 through 721_n may be updated using the control unit 604 and/or the memory mentioned in the description with reference to Figure 6. The memory stores information on a plurality of gamma curves and information on a plurality of colour domain conversion matrixes.

The second transmitter 722 selects and outputs one among the luminance and chrominance signals respectively received from the first through n-th colour domain conversion matrixes 721_1 through 721_n according to the output format of the image capture device. The information on the output format may be provided from the control unit 604. The luminance and chrominance signal selected by the second transmitter 722 is output as a captured image signal.

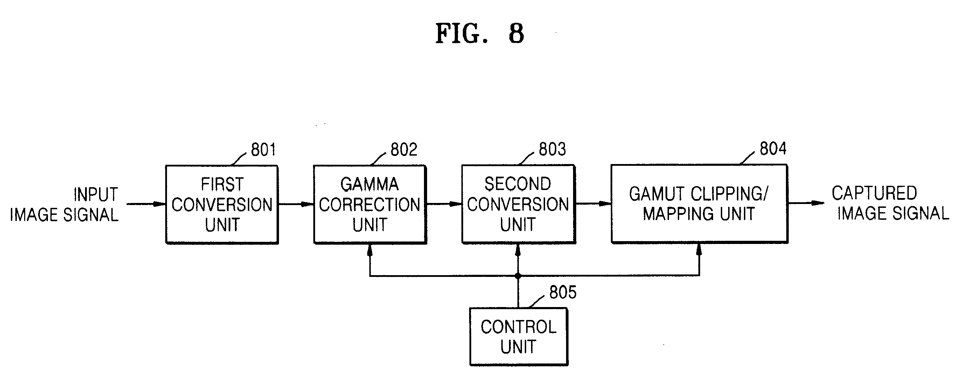

Figure 8 is a functional block diagram of an image capture device according to yet another embodiment of the present invention. Referring to Figure 8, the image capture device includes a first conversion unit 801, a gamma correction unit 802, a second conversion unit 803, a gamut clipping/mapping unit 804, and a control unit 805. The first conversion unit 801, the gamma correction unit 802, and the second conversion unit 803 shown in Figure 8 are the same as the first conversion unit 601, the gamma correction unit 602, and the second conversion unit 603 shown in Figure 6.

The gamut clipping/mapping unit 804 shown in Figure 8 is the same as the gamut clipping/mapping unit 404 shown in Figure 4.

The control unit 805 provides information on an output format of the image capture device to the gamma correction unit 802 and the second conversion unit 803. In addition, the control unit 805 may provide gamma curve information and colour domain conversion matrix information to the gamma correction unit 802 and the second conversion unit 803, respectively, according to the output format of the image capture device. The control unit 805 may also provide the information on the output format of the image capture device and wide colour gamut information corresponding to the output format or the wide colour gamut information and information for gamut mapping to the gamut clipping/mapping unit 804.

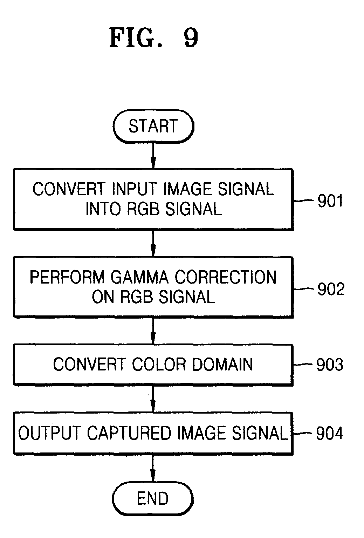

Figure 9 is a flowchart of an image capture method according to an embodiment of the present invention. Referring to Figure 9, when an image signal is input through an imaging device (not shown), the input image signal is converted into an RGB signal having a wide colour gamut in operation 901. The conversion from the input image signal to the RGB signal is performed by the first conversion unit 101 shown in Figure 1, as described above.

In operation 902, gamma correction is performed on the RGB signal having the wide colour gamut based on gamma curve information corresponding to an output format of an image capture device. As described with reference to Figure 6, the gamma curve information may be updated according to a current output format of the image capture device or may include all gamma curves corresponding to output formats that can be set in the image capture device. The gamma correction of the RGB signal having the wide colour gamut may be performed in the same manner as that performed by the gamma correction unit 102 described with reference to Figure 1. When the gamma correction information includes all of the gamma curves corresponding to the available output formats, the gamma correction is performed using a gamma curve corresponding to the current output format of the image capture device.

In operation 903, a colour domain of the gamma corrected RGB signal is converted into a luminance and chrominance signal having a colour domain set according to the current output format of the image capture device. For this conversion, a colour domain conversion matrix described with reference to Figures 1, 4, 6, 7, and 8 is used according to the current output format of the image capture device.

In operation 904, a signal obtained in operation 903 is output as a captured image signal.

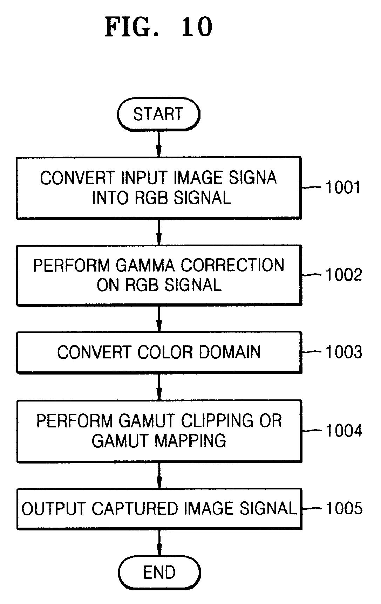

Figure 10 is a flowchart of an image capture method according to another embodiment of the present invention. Operations 1001 through 1003 are the same as the operations 901 through 903 shown in Figure 9. Accordingly, in operation 1003, a luminance and chrominance signal having a colour domain corresponding to a current output format of an image capture device is produced. The luminance and chrominance signal has a wide colour gamut. In operation 1004, gamut clipping is performed on the luminance and chrominance signal based on a wide colour gamut clipping range corresponding to the current output format of the image capture device or gamut mapping is performed on the luminance and chrominance signal based on the wide colour gamut clipping range corresponding to the current output format of the image capture device and clipping ratios. The gamut clipping and the gamut mapping is performed in the same manner as that performed by the gamut clipping/mapping unit 404 described with reference to Figure 4.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, the present invention provides an image with minimized colour distortion based on a wide colour gamut so that colour reproduction according to human visual characteristics is possible when an image captured by an image capture device is reproduced. In addition, the present invention selectively uses a gamma curve and a colour domain conversion matrix according to an output format, thereby providing an image capture device that can provide image signals having colour properties appropriate to various standards, for example, the sRGB standard, the sYCC standard, and the xvYCC standard.

While this invention has been particularly shown and described with reference to preferred embodiments thereof, it will be understood by those skilled in the art that various changes in form and details may be made therein without departing from the scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

**Claims**

1. An image capture device comprising:

   a first conversion unit for converting an input image signal into an RGB signal having a wide colour gamut;
   a gamma correction unit for performing gamma correction on the RGB signal using gamma curve information determined according to an output format of the image capture device; and
   a second conversion unit for converting a colour domain of the gamma corrected RGB signal into a luminance and chrominance signal having a colour domain determined according to the output format of the image capture device, using a colour domain conversion matrix.

2. The image capture device of claim 1, wherein the gamma correction unit is arranged to update the gamma curve information each time the output format of the image capture device changes.

3. The image capture device of claim 2, wherein the second conversion unit is arranged to update the colour domain conversion matrix each time the output format of the image capture device changes.

4. The image capture device of claim 1, 2 or 3, further comprising a control unit for providing information on the output format of the image capture device, wherein the gamma correction unit comprises:

   a plurality of gamma curve tables respectively corresponding to a plurality of output formats that can be set in the image capture device; and
   a first transmitter for selecting a signal from one gamma curve table among the plurality of gamma curve tables according to the output format of the image capture device and transmitting the signal to the second conversion unit, and wherein

each of the gamma curve tables is arranged to receive the RGB signal output from the first conversion unit.

5. The image capture device of claim 4, wherein the second conversion unit comprises:

a plurality of colour domain conversion matrixes respectively corresponding to the plurality of output formats that can be set in the image capture device; and
a second transmitter for selecting and outputting a signal from one colour domain conversion matrix among the plurality of colour domain conversion matrixes according to the output format of the image capture device, and wherein
each of the colour domain conversion matrixes is arranged to receive the gamma corrected RGB signal output from the first transmitter.

6. The image capture device of claim 5, further comprising a gamut clipping/mapping unit for performing gamut clipping on the luminance and chrominance signal output from the second conversion unit based on a wide colour gamut clipping range corresponding to the output format, or for performing gamut mapping on the luminance and chrominance signal output from the second conversion unit based on the wide colour gamut clipping range corresponding to the output format and a clipping ratio.

7. The image capture device of claim 3, further comprising a gamut clipping/mapping unit for performing gamut clipping on the luminance and chrominance signal output from the second conversion unit based on a wide colour gamut clipping range corresponding to the output format, or for performing gamut mapping on the luminance and chrominance signal output from the second conversion unit based on the wide colour gamut clipping range corresponding to the output format and a clipping ratio.

8. The image capture device of any preceding claim, further comprising a gamut clipping/mapping unit for performing gamut clipping on the luminance and chrominance signal output from the second conversion unit based on a wide colour gamut clipping range corresponding to the output format, or for performing gamut mapping on the luminance and chrominance signal output from the second conversion unit based on the wide colour gamut clipping range corresponding to the output format and a clipping ratio.

9. An image processing method for an image capture device, comprising:

converting an input image signal into an RGB signal having a wide colour gamut;
performing gamma correction on the RGB signal using gamma curve information determined according to an output format of the image capture device; and
converting a colour domain of the gamma corrected RGB signal into a luminance and chrominance signal having a colour domain determined according to the output format of the image capture device, using a colour domain conversion matrix, and outputting the luminance and chrominance signal.

10. The method of claim 9, wherein the gamma curve information is updated each time the output format of the image capture device changes.

11. The method of claim 9 or 10, wherein the colour domain conversion matrix is updated each time the output format of the image capture device changes.

12. The method of claim 9, 10 or 11, wherein the performing of the gamma correction comprises:

selecting one gamma corrected RGB signal among a plurality of gamma corrected RGB signals obtained using gamma curve information corresponding to a plurality of output formats of the image capture device; and
outputting the selected gamma corrected RGB signal.

13. The method of claim 12, wherein the converting of the colour domain of the gamma corrected RGB signal comprises:

selecting one luminance and chrominance signal among a plurality of luminance and chrominance signals obtained using a plurality of colour domain conversion matrixes respectively corresponding to the plurality of output formats; and
outputting the selected luminance and chrominance signal.

14. The method of claim 13, further comprising performing gamut clipping on the luminance and chrominance signal based on a wide colour gamut clipping range corresponding to the output format of the image capture device, or performing gamut mapping on the luminance and chrominance signal based on the wide colour gamut clipping range corresponding to the output format and a clipping ratio.

15. The method of claim 11, further comprising performing gamut clipping on the luminance and chrominance signal based on a wide colour gamut clipping range corresponding to the output format of the image capture device, or performing gamut mapping on the luminance and chrominance signal based on the wide colour gamut clipping range corresponding to the output format and a clipping ratio.

16. The method of any one of claims 9 to 15, further comprising performing gamut clipping on the luminance and chrominance signal based on a wide colour gamut clipping range corresponding to the output format of the image capture device, or performing gamut mapping on the luminance and chrominance signal based on the wide colour gamut clipping range corresponding to the output format and a clipping ratio.

17. A computer program which, when executed, causes the method of any one of claims 9 to 16 to be performed.

18. An image processing method for use in an image capture device, the method comprising the steps of:

converting an input image signal into an RGB signal;
performing gamma correction of the RGB signal; and
clipping the gamma corrected signal in accordance with a desired colour gamut.

19. A method according to claim 18, further comprising the step of converting the gamma corrected signal to a luminance and chrominance based signal prior to the step of clipping the gamma corrected signal.

# FIG. 1

INPUT IMAGE SIGNAL → | FIRST CONVERSION UNIT 101 | → | GAMMA CORRECTION UNIT 102 | → | SECOND CONVERSION UNIT 103 | → CAPTURED IMAGE SIGNAL

# FIG. 2

OUTPUT SIGNAL

INPUT SIGNAL

# FIG. 3

OUTPUT SIGNAL

INPUT SIGNAL

## FIG. 4

INPUT
IMAGE SIGNAL →
FIRST CONVERSION UNIT `401`
→ GAMMA CORRECTION UNIT `402`
→ SECOND CONVERSION UNIT `403`
→ GAMUT CLIPPING/ MAPPING UNIT `404`
→ CAPTURED IMAGE SIGNAL

EP 1 796 372 A1

# FIG. 5

# FIG. 6

## FIG. 7

FIG. 8

INPUT IMAGE SIGNAL → **801** FIRST CONVERSION UNIT → **802** GAMMA CORRECTION UNIT → **803** SECOND CONVERSION UNIT → **804** GAMUT CLIPPING/ MAPPING UNIT → CAPTURED IMAGE SIGNAL

**805** CONTROL UNIT

EP 1 796 372 A1

# FIG. 9

START

CONVERT INPUT IMAGE SIGNAL
INTO RGB SIGNAL — 901

PERFORM GAMMA CORRECTION
ON RGB SIGNAL — 902

CONVERT COLOR DOMAIN — 903

OUTPUT CAPTURED IMAGE SIGNAL — 904

END

# FIG. 10

```
            ( START )
                |
                v
   ┌─────────────────────────┐
   │ CONVERT INPUT IMAGE SIGNA│── 1001
   │      INTO RGB SIGNAL     │
   └─────────────────────────┘
                |
                v
   ┌─────────────────────────┐
   │ PERFORM GAMMA CORRECTION │── 1002
   │       ON RGB SIGNAL      │
   └─────────────────────────┘
                |
                v
   ┌─────────────────────────┐
   │   CONVERT COLOR DOMAIN   │── 1003
   └─────────────────────────┘
                |
                v
   ┌─────────────────────────┐
   │ PERFORM GAMUT CLIPPING OR│── 1004
   │      GAMUT MAPPING       │
   └─────────────────────────┘
                |
                v
   ┌─────────────────────────┐
   │OUTPUT CAPTURED IMAGE SIGNAL│── 1005
   └─────────────────────────┘
                |
                v
             ( END )
```

**European Patent Office**

## EUROPEAN SEARCH REPORT

Application Number

EP 06 12 5758

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 558 021 A (KONICA MINOLTA PHOTO IMAGING I [JP]) 27 July 2005 (2005-07-27) <br> * paragraphs [0005], [0017] - [0020] * <br> * paragraphs [0114], [0165] - [0169] * <br> * figure 6 * <br> * paragraphs [0205] - [0212], [0232] * <br> ----- | 1-19 | INV. H04N1/60 |
| X <br><br> A | EP 1 549 082 A (SONY CORP [JP]) 29 June 2005 (2005-06-29) <br> * abstract * <br><br><br> * figure 1 * <br> * paragraphs [0018] - [0024], [0029] - [0032], [0041] * <br> * paragraphs [0063], [0089]; figure 17 * <br> ----- | 1-3, 9-11,17 <br> 4-8, 12-16, 18,19 | |
| X <br><br> A | EP 1 197 917 A2 (SEIKO EPSON CORP [JP]) 17 April 2002 (2002-04-17) <br> * abstract * <br><br><br> * figure 7 * <br> * paragraphs [0012] - [0021] * <br> * paragraphs [0051] - [0057], [0070], [0071] * <br> * paragraphs [0097] - [0112]; figures 11,12 * <br> ----- | 1-3, 9-11,17 <br> 4-8, 12-16, 18,19 | TECHNICAL FIELDS SEARCHED (IPC) <br><br> H04N |
| A | JP 2005 117522 A (CANON KK) 28 April 2005 (2005-04-28) <br> * abstract * <br> ----- | 1-19 | |

The present search report has been drawn up for all claims

| Place of search | Date of completion of the search | Examiner |
|---|---|---|
| The Hague | 16 February 2007 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

## ANNEX TO THE EUROPEAN SEARCH REPORT
## ON EUROPEAN PATENT APPLICATION NO.

EP 06 12 5758

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2007

| Patent document cited in search report | | Publication date | Patent family member(s) | | Publication date |
|---|---|---|---|---|---|
| EP 1558021 | A | 27-07-2005 | CN | 1645904 A | 27-07-2005 |
| | | | JP | 2005208817 A | 04-08-2005 |
| | | | US | 2005185837 A1 | 25-08-2005 |
| EP 1549082 | A | 29-06-2005 | CN | 1689340 A | 26-10-2005 |
| | | | WO | 2004025966 A1 | 25-03-2004 |
| | | | JP | 2004104464 A | 02-04-2004 |
| | | | KR | 20050042185 A | 04-05-2005 |
| | | | TW | 238649 B | 21-08-2005 |
| | | | US | 2006119713 A1 | 08-06-2006 |
| EP 1197917 | A2 | 17-04-2002 | US | 2002044293 A1 | 18-04-2002 |
| JP 2005117522 | A | 28-04-2005 | NONE | | |

EPO FORM P0459

For more details about this annex : see Official Journal of the European Patent Office, No. 12/82